# EUROPÄISCHE PATENTSCHRIFT

(11) **EP 1 132 129 B1**
(45) Veröffentlichungstag und Bekanntmachung des Hinweises auf die Patenterteilung: **05.07.2006**
(21) Anmeldenummer: 01103578.9
(22) Anmeldetag: 20.02.2001
(51) Int. Cl.: B01J 20/32, B01J 20/26, C08F 8/32, C07K 14/75

(54) **Verfahren zum Herstellen eines Adsorbens zum Absenken der Konzentration von Fibrinogen und/oder Fibrin, Adsorbens und Verwendung des Adsorbens zur Herstellung eines Adsorbers**
Method for preparing an adsorbent to lower fibrinogen and/or fibrin concentration, adsorbent and use thereof for manufacturing an adsorber
Méthode de préparation d'un adsorbant pour diminuer la concentration de fibrinogène et/ou de fibrine, adsorbant et son utilisation dans la fabrication d'un adsorbeur

(30) Priorität: 09.03.2000 DE 10011482
(43) Veröffentlichungstag der Anmeldung: 12.09.2001
(73) Patentinhaber: Fresenius Medical Care Deutschland GmbH, 61352 Bad Homburg (DE)
(72) Erfinder: Leinenbach, Hans Peter, Dr., 66636 Tholey (DE); Mitschulat, Heike, Dr., 66606 St. Wendel (DE); Metzger, Wolfgang, 66113 Saarbrücken (DE); Otto, Veit, Dr., 66606 St. Wendel (DE); Hepper, Martin, 67435 Neustadt (DE)
(74) Vertreter: Müller-Boré & Partner Patentanwälte

(56) Entgegenhaltungen:
- EP-A- 0 424 698
- EP-A- 0 434 354
- EP-A- 0 858 831
- DE-A- 3 909 018
- DE-A- 3 926 539
- DE-A- 19 856 387
- US-A- 4 913 812

## Beschreibung

Die Erfindung betrifft die Verwendung eines Adsorbens zur Herstellung eines Adsorbers zum Absenken der Konzentration von Fibrinogen und/oder Fibrin in Blut oder Blutplasma, wobei des Adsorbens ein Trägermaterial ist, das durch Einführung von kovalent gebundenen basischen Gruppen aktiviert und bei einer Temperatur von mehr als 100°C hitzebehandelt worden ist.

Adsorbentien sind in der Medizintechnik weit verbreitet. Häufig beschrieben werden Adsorber mit Adsorbentien, die aus Blut Lipoproteine niedriger Dichte (LDL) entfernen bzw. deren Konzentration herabsetzen, wie dies aus der DE 39 32 971 bekannt ist. Die Schrift beschreibt das Adsorbermaterial als einen organischen Träger mit festgelegter Partikelgröße und Ausschlußgrenze, der auf seiner Oberfläche einen Liganden trägt, an den das LDL-Molekül bindet.

In der DE 197 29 591 ist die Verwendung eines Liganden für Fibrinogen und/oder Fibrin beansprucht, um die aufgrund überhöhten Fibrinogenanteils im Blut erzeugten Krankheiten zu heilen oder diesen zumindest vorzubeugen. Der Ligand ist dabei in der DE 197 29 591 als eine Substanz definiert, die spezifisch an Fibrinogen und/oder Fibrin bindet und ist vorzugsweise ein Peptid mit drei bis 10 Aminosäuren.

Aus Artificial Organs, Band 20, Nr. 9 (1996), Seiten 986-990 ist die Reduzierung der Konzentrationen von Plasmafibrinogen, Immunoglobulin G (IgG) und Immunoglobulin M (IgM) durch Immunoadsorptionstherapie mit Tryptophan- oder Phenylalaninadsorbentien bekannt. In der Immunoadsorptionstherapie werden Adsorptionssäulen verwendet, die als Träger sphärische Polyvinylalkohol (PVA)-Gelteilchen aufweisen. Die PVA-Gelteilchen tragen auf ihrer Oberfläche entweder Tryptophan oder Phenylalanin als Aminosäureligand, der über Spacer kovalent an das PVA gebunden ist. Das von Blutzellen abgetrennte Plasma wird über die Adsorptionsäule geleitet und danach vor der Rückführung in den Patienten wieder mit den Blutzellen vereinigt. Mit dieser Immunoadsorptionstherapie werden gleichzeitig die Konzentrationen von Fibrinogen, IgG und IgM signifikant reduziert.

Auch wenn die Adsorption als Mittel zur Linderung von Krankheiten mittlerweile in den klinischen Alltag eingezogen ist, so werden doch steigende Anforderungen an die Selektivität der Adsorption gestellt. Das heißt, daß die Adsorber zum einen keine bzw. so wenig wie möglich für den Menschen notwendige Proteine adsorbieren dürfen, aber auf der anderen Seite die Herabsetzung der Konzentration schädlicher Proteine so hoch ist, daß die den Patienten belastende extrakorporale Behandlung möglichst effektiv wird.

Es ist seit einiger Zeit bekannt, daß eine Reihe von Krankheiten auf mangelnder Mikrozirkulation des Blutes beruhen. Als Beispiele seien die in der nachfolgenden Tabelle 1 aufgeführten Krankheiten genannt.

**Tabelle 1:**

| |
|---|
| ZNS: |
| Schlaganfall |
| TIA (Transient Ischemic Attack) |
| PRIND (Prolonged Reversible Ischemic Neurological Deficit) |
| Chronische vaskuläre Erkrankungen des ZNS |
| Chronische intracranieus Durchblutungsstörungen |
| Chronische extracranielle Durchblutungsstörungen |
| Zerebrovaskuläre Durchblutungsstörungen |
| Demenz |
| Alzheimer Krankheit |
| Schwerer zentraler Schwindel |
| |
| Auge: |
| Chronische Durchblutungsstörung |
| Akuter Gefäßverschluß |
| |
| Ohr: |
| Hörsturz |
| Innenohr bedingter Schwindel |
| Morbus Menière |
| |
| Lunge: |
| Primäre Pulmonale Hypertonie |
| Venoocclusive Erkrankungen der Lunge |
| Thrombotische primäre pulmonale Hypertonie |
| Thromboembolische Erkrankungen der großen Gefäße |
| |
| Herz: |
| Transplantationsvaskulopathien |
| Akuter Myokardindarkt |
| Instabile Angina pectoris |
| Small vessel disease des Herzens |
| Nicht operable schwere koronare Herzkrankheit |
| Kardiomyopathien |
| |
| Abdomen: |
| Angina abdominalis |
| |
| Nieren: |
| Vaskulopathien der Nieren |
| Glomerulonephritiden |
| Chronische Niereninsuffizienz |
| |
| Periphere arterielle Verschlußkrankheiten |
| Akute Gefäßverschlüsse |
| Vaskulitiden |
| Septischer Schock |
| DisseutinieztE intravaskuläre Coagulation (DIC) anderer Genese, z B. bei Tumorerkrankungen |
| Diabetes Typ I + II |
| Diücsscbc Rednavathie |
| Diabetische Neuropathie |
| Diabetische Nephropathie. |

Bislang werden diese Krankheiten hauptsächlich medikamentös behandelt und dabei oft nur die Symptome beseitigt. Die bislang bekannten Maßnahmen, die Mikrozirkulation und die Rheologie des Blutes zu behandeln und zu beeinflussen, bestehen im Plasmaaustausch, der Heparin-induzierten extrakorporalen LDL-Cholesterin-Präzipitation (HELP) und in der Adsorption von Fibrinogen mit Hilfe eines Ligandes an den Fibrin und/oder Fibrinogen spezifisch bindet. Die Verwendung eines derartigen Liganden ist in der DE 197 29 591 beschrieben. Als Liganden werden Peptide genannt, die vorzugsweise 3 bis 10 Aminosäuren aufweisen, wobei die besonders bevorzugte Sequenz Glycin-Prolin-Arginin-Prolin-X sein soll.

Die synthetische Herstellung von Peptiden ist jedoch ein umständliches und kostenaufwendiges Verfahren, so daß der Einsatz als Ligand eines spezifischen Adsorbers sehr kostspielig ist.

Darüber hinaus lösen Peptide ab einer bestimmten Länge bereits Antikörperreaktionen aus, so daß es nach wiederholter Anwendung langfristig zu heftigen Immunreaktionen kommen kann. Zwar werden, um die Immunabwehr herabzusetzen, möglichst kurze Peptidoligomere verwendet, doch kann eine Immunogenität nie voll ausgeschlossen werden. Außerdem ist eine Leckage, ein unbemerktes Ablösen von Peptidstücken, besonders gefährlich, da Peptide als Bestandteil von körpereigenen Strukturen bioaktive Moleküle darstellen.

Auch die Immunoadsorptionstherapie, wie in Artificial Organs, Band 20, Nr. 9 (1996), Seiten 986-990 beschrieben, verwendet die Aminosäuren Tryptophan oder Phenylalanin zur Anbindung an die PVA-Gelteilchen und ist daher ebenfalls umständlich und kostspielig. Überdies werden mit dieser Therapie auch Substanzen, die nicht aus dem Plasma entfernt werden sollen, wie IgG und IgM, in vergleichbaren Mengen aus dem Plasma abgetrennt, wie das Fibrinogen.

DE 39 09 018 A offenbart ein Verfahren zur Reinigung von Enzymen, welche auf aromatische Substrate gerichtet sind und die sich in einem wäßrigen Medium befinden, mittels Adsorption. Das Verfahren ist dabei dadurch gekennzeichnet, daß die Enzyme durch hydrophobe Adsorption an ein spezifisches Trägermaterial T-PbA fixiert werden, welches kovalent an das Trägermaterial gebundene Phenylbutylamingruppen besitzt.

EP 0 434 354 A offenbart ein Abtrennungsmaterial zur Abtrennung und Rückgewinnung eines Blutgerinnungsfaktors, welches eine poröse Matrix mit daran gebundenden Liganden umfaßt, die eine Affinität zu einem entsprechenden Blutgerinnungsfaktor aufweisen.

EP 0 858 831 A offenbart eine Vorrichtung zur Reinigung proteinhaltiger Lösungen wie Blut, Blutplasma oder Zellkulturmedien. Die Vorrichtung besteht aus einem biokompatiblen Trägermaterial aus Kunststoffmaterial, das mittels Peptidbindung mit Albumin kovalent beschichtet ist.

EP 0 424 698 A offenbart ein zur Eliminierung von Biomakromolekülen aus Vollblut in extrakorporalem Kreislauf geeignetes Adsorbens, das ein poröses, sphärisches Trägermaterial und einen organischen Liganden umfaßt, der über einen Spacer au das Trägermaterial kovalent gebunden ist.

Es ist Aufgabe vorliegender Erfindung, eine Verwendung eines Adsorbens zum Herstellen eines Adsorbers zum Absenken der Konzentration von Fibrinogen und/oder Fibrin in Blut oder Blutplasma bereitzustellen, der bessere Eliminationsraten aufweist, wobei das Adsorbens kostengünstiger hergestellt werden kann als dieim Stand der Technik bekannten Adsorbentien. Dabei soll das Adsorbens biokompatibel sein und keine Immunabwehr hervorrufen. Die Aufgabe wird durch eine Verwendung gemäß den Merkmalen des Anspruchs 1 gelöst. Bevorzugte Ausführungsformen der Verwendung des Adsorbens zur Herstellung eines Adsorbers zum Absenken der Konzentration von Fibrinogen und/oder Fibrin in Blut oder Blutplasma sind in den weiteren Ansprüchen definiert.

Überraschenderweise hat sich herausgestellt, daß ein Adsorbens, welches ein Trägermaterial mit einer basischen Oberfläche aufweist und anschließend einer Hitzebehandlung bei einer Temperatur von mehr als 100°C unterzogen wurde, eine deutlich bessere Absenkung des Fibrinogenspiegels bewirkt als alle bisher bekannten Adsorbentien, so daß die Mikrozirkulation nach Behandlung verbessert ist. Insbesondere Amin- und/oder Amidgruppen auf der äußeren Oberfläche des Trägermaterials bewirken nach der Hitzebehandlung eine Steigerung der Wirksamkeit. Dabei ist es gleichgültig, ob das Trägermaterial lediglich aminiert wurde, z.B. durch Behandlung mit Ammoniak, oder ob in das Trägermaterial kovalent gebundene synthetische Seitenketten eingeführt werden, die Amin- oder Amidgruppen aufweisen und bei Temperaturen von mehr als 100°C, insbesondere 121°C stabil sind. Mit Hilfe einer Hitzebehandlung von größer 100°C kann die Absenkung des Fibrinogenspiegels von allen bekannten Adsorbermaterialien mit endständigen oder in der Seitenkette sich befindlichen, bei Temperaturen von mehr als 100°C, insbesondere 121°C stabilen Amin- oder Amidgruppen gesteigert werden. Überraschend ist, daß die schon einfach durchzuführende Aminierung der Oberfläche, z.B. mit Ammoniak, und vorzugsweise anschließender Hitzeaktiverung zu einer ausgezeichneten Fibrinogenbindungskapazität führt. Dementsprechend ist die Einführung von Liganden, die spezifisch an Fibrinogen binden, oder synthetischen Seitenketten nicht notwendig.

Wichtig für den Einsatz eines derartigen Adsorbens ist die Möglichkeit der Sterilisierbarkeit, insbesondere der Hitzesterilisierbarkeit z.B. bei 121°C, da das behandelte Blut wieder dem Patienten zugeführt werden soll und keine Sepsis oder Entzündungen auslösen darf. Dabei ist besonders vorteilhaft, daß mit einem einzigen Verfahrensschritt die Hitzebehandlung und die Sterilisierbarkeit gleichzeitig durchgeführt werden können. Darüber hinaus hat sich das erfindungsgemäß verwendete Adsorbens als biokompatibel erwiesen.

Prinzipiell sind verschiedenartige Trägermaterialien zur erfindungsgemäßen Verwendung geeignet, wie beispielweise Glas, Kohlenhydrate, Sepharose, Silica oder organische Trägermaterialien, wie Copolymere von Acrylaten oder Methacrylaten sowie Polyamiden. Vorzugsweise besteht das Trägermaterial aus organischem Material und besonders bevorzugt sind von (Meth)acrylsäureestern und/oder -amiden abgeleitete Copolymere. Diese weisen vorzugsweise Epoxidgruppen auf. Unter dem Begriff "(Meth)acryl" sind sowohl die entsprechenden Acryl- als auch Methacrylverbindungen zu verstehen.

Als Trägermaterial für das erfindungsgemäße Absorbens ist am meisten bevorzugt ein durch Polymerisation der monomeren Einheiten
(A) (Meth)acrylamid in einer Menge von 10 bis 30 Gew.-%,
(B) N,N'-Methylen-bis(meth)acrylamid in einer Menge von 30 bis 80 Gew.-%, und
(C) Allylglycidylether und/oder Glycidyl-(meth)acrylat in einer Menge von 10 bis 20 Gew.-%, jeweils bezogen auf das Gesamtgewicht der monomeren Einheiten,
hergestelltes, statistisches Copolymer.

Das Copolymer wird vorzugsweise durch Suspensionspolymerisation hergestellt.

Ein derartiges Copolymer ist im Handel unter der Bezeichnung Eupergit C250L bzw. Eupergit FE162 von Röhm GmbH erhältlich.

Das vorgenannte Copolymer oder ein anderes organisches Trägermaterial, das vorzugsweise Oxirangruppen (Epoxidgruppen) enthält, z.B. ein im Rahmen der vorliegenden Erfindung ebenfalls bevorzugt verwendetes Copolymer, welches durch Suspensionspolymerisation von Ethylenglycoldimethacrylat und Glycidylmethacrylat und/oder Allylglycidylether erhalten wurde, wird durch Einführung von kovalent an das Trägermaterial gebundenen basischen Gruppen, vorzugsweise Stickstoff enthaltenden Gruppen und am meisten bevorzugt Amingruppen, aktiviert. Die Aktivierung erfolgt vorzugsweise mit Ammoniak oder einem primären Amin. Dabei ist die Verwendung einer wässrigen Ammoniaklösung aus verfahrenstechnischen Gründen und aus Kostengründen am meisten bevorzugt.

Das Trägermaterial kann in der Form von sphärischen, unaggregierten Partikeln, sog. Beads, Fasern oder einer Membran vorliegen, wobei eine Porosität des Trägermaterials die Oberfläche erhöht. Die Porosität kann beispielsweise durch Zugabe von Porenbildnern, wie Cyclohexanol oder 1-Dodecanol zu der Reaktionsmischung der Suspensionspolymerisation erreicht werden. Es ist des weiteren vorteilhaft, wenn das poröse Trägermaterial eine Ausschlußgrenze von mindestens 10⁷ Dalton besitzt, so daß das Fibrinogen mit dem Plasma in die Poren eindringen kann, um zu den basischen Gruppen zu gelangen.

Eine weitere vorteilhafte Ausgestaltung der Erfindung liegt darin, das erfindungsgemäß verwendete Adsorbens im Vollblut einzusetzen. Dazu besteht das Trägermaterial aus unaggregierten, sphärischen Partikeln in einem Teilchengrößenbereich von 50 bis 250 um und besitzt eine Ausschlußgrenze von mindestens 10⁷ Dalton. Dadurch können Blutzellen in Kontakt mit dem Adsorbens treten, ohne daß sich die das Adsorbens enthaltende Säule zusetzt oder unzumutbar viele Zellen zurückgehalten werden oder aggregieren. Dies wird durch die Größe und die sphärische Gestalt der Beads in Verbindung mit der Ausschlußgrenze bei dem erfindungsgemäß verwendeten Adsorbens ermöglicht, da die Zellen an der glatten äußeren Oberfläche der Beads entlanggleiten, wodurch nur geringe Thrombozytadhäsion erfolgt und das Plasma mit dem Fibrinogen dennoch die Möglichkeit hat, in die Poren einzudringen.

Dadurch entfallen extrakorporale Schritte, wie die Abtrennung von Blutzellen, das Behandeln des isolierten Plasmas und das Zusammenführen der Blutbestandteile, wodurch die Biokompatibilität des Verfahrens gesteigert wird, beispielsweise die Gefahr einer Komplementaktivierung weiter erheblich verringert wird. Das Entfallen extrakorporaler Schritte bewirkt eine Verkürzung der Behandlungszeit und eine Vereinfachung des Verfahrens, wodurch eine Erhöhung der Sicherheit und des Wohlbefindens des Patienten erreicht wird.

Der mit dem erfindungsgemäß verwendeten Absorbens ausgerüstete Absorber weist ein Gehäuse auf, welches vorzugsweise in Röhren- oder Säulenform ausgebildet ist, und welches das Absorbens als Füllmaterial enthält. Im Hinblick auf die üblicherweise durchzusetzenden Blut- bzw. Blutplasmamengen und die Effizienz des erfindungsgemäßen Absorbers umfaßt der Absorber vorzugsweise ein Volumen von 250 bis 1250 ml. Der Absorber kann einzeln oder im Doppel-oder Mehrfachbetrieb eingesetzt werden. Bei zwei oder mehr Adsorbern besteht die Möglichkeit, abwechselnd einen Adsorber mit dem Blut bzw. Blutplasma zu beschicken, während der andere Adsorber regeneriert wird. Dies führt zu einer weiteren Effizienz beim Einsatz des erfindungsgemäß verwendeten Adsorbens. Der das Adsorbens enthaltende Adsorber ist vorzugsweise so ausgebildet, daß er ein Gehäuse mit einem kopfseitigen Einlaßbereich aufweist, durch den das Blut oder Blutplasma dem Adsorber zugeführt wird, wobei sich in diesem Fall der Auslaß am Boden des Gehäuses des Adsorbers befindet.

Um zu verhindern, daß unerwünschte Substanzen, z.B. Substanzen, die vom Adsorbensmaterial herrühren, mit dem behandelten Blut bzw. Blutplasma in den Blutkreislauf des Patienten zurückgeführt wird, befindet sich am Auslaß des Gehäuses des Adsorbers vorzugsweise ein Filter. Dabei handelt es sich vorzugsweise um einen Partikelfilter.

Im folgenden sind beispielhaft zwei Ausführungsformen der erfindungsgemäßen Verwendung angegeben.

### Beispiel 1:

Pro 10g Trockengewicht Eupergit C250 L der Firma Röhm GmbH (Lot-No. 1690419573) wurden 100 ml wässeriger Ammoniak (12,5%) zugegeben und 4h auf einem Taumelschüttler bei Raumtemperatur inkubiert. Anschließend wurde das aminierte Trägermaterial 10 mal mit je 200 ml Aqua dest gewaschen. Die Aminierung des Eupergit, einem Copolymer aus Methacrylamid, Allylglycidylether, Glycidylmethacrylat und N,N'-Methylen-bis(methacrylamid), kann schematisch wie folgt dargestellt werden:

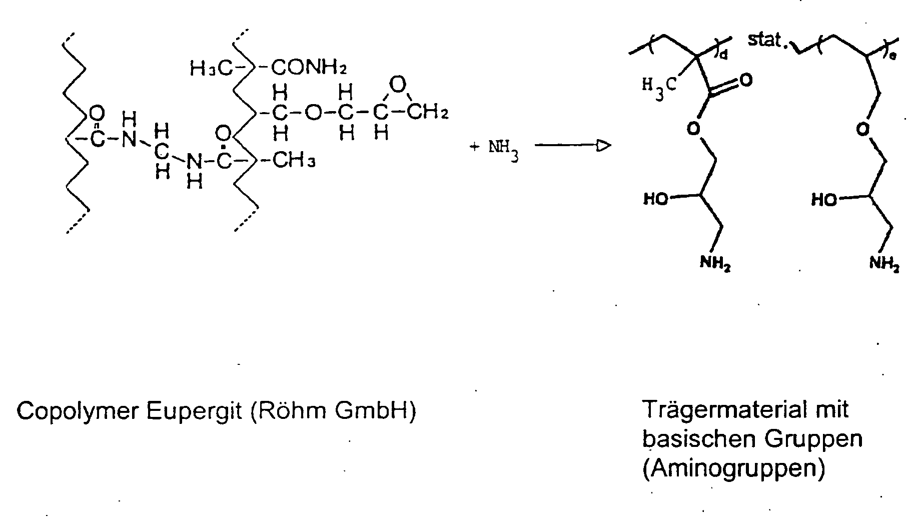

Ein Teil des gewaschenen und getrockneten, aminierten (d.h. aktivierten) Trägermaterials wird bei 121 °C hitzesterilisiert.

Die so gewonnenen Adsorbentien, das heißt nicht aktiviertes und aktiviertes Copolymer Eupergit, jeweils mit und ohne Hitzebehandlung bei 121°C, wurden in einem Batchverfahren auf ihre Bindungseigenschaft zu Fibrinogen getestet. Dazu wurden jeweils 5 ml humanes Plasma, welches im Verhältnis 20:1 mit Citrat antikoaguliert war, mit 1g (Feuchtgewicht) Adsorbens 1h bei Raumtemperatur auf einem Rollenmischer inkubiert. Sowohl vor Inkubation als auch nach Inkubation wurde im Überstand der Fibrinogengehalt turbidimetrisch nach der CLAUSS-Methode (Clauss, A., Gerinnungsphysiologische Schnellmethode zur Bestimmung des Fibrinogens: Acta Haematologica (1957) 17, 237-246) an einem Koagulometer (BCS der Firma Behring) bestimmt. Die Bindungskapazität ergibt sich aus Differenzen der Prä- und Postwerte. In Beispiel 1 betrug die Ausgangskonzentration an Fibrinogen 3,3 mg/ml Plasma.

In der nachfolgend aufgeführten Graphik ist die Fibrinogenabsenkung, d.h. die Fibrinogenbindung in mg/ml Gel (Trägermaterial), im Vergleich sowohl zu den unaktivierten als auch zu den aktivierten Absorbentien jeweils mit bzw. ohne Hitzbehandlung angeführt:

Aus der Graphik ist ersichtlich, daß das mit Aminogruppen versehene Trägermaterial Fibrinogen signifikant stärker bindet, als das nicht aminierte Trägermaterial. Ferner ist ersichtlich, daß die Hitzebehandlung des aktivierten (aminierten) Trägermaterials eine deutliche Steigerung der FibrinogenBindungskapazität zur Folge hat, während eine Hitzebehandlung des nicht aktivierten Trägermaterials keine höhere Bindungskapazität ergibt.

In der folgenden Graphik ist das Ergebnis einer Wiederholung des Beispiels 1 wiedergegeben. Hier betrug die Ausgangskonzentration an Fibrinogen 2,6 mg/ml Plasma. Dadurch wird der vorstehend genannte Befund bestätigt.

### Beispiel 1 (Wiederholung)

### Beispiel 2

Herstellung eines Trägermaterials durch Umsetzung von Ethylenglycoldimethacrylat mit Glycidylmethacrylat

Das Trägermaterial wurde gemäß der in Beispiel 11 von WO 95/26988 beschriebenen Weise hergestellt.

Das erhaltene Trägermaterial wurde in der in Beispiel 1 beschriebenen Weise mit wässerigem Ammoniak aktiviert. Das aminierte (aktivierte) Trägermaterial ist in folgender Graphik schematisch dargestellt.

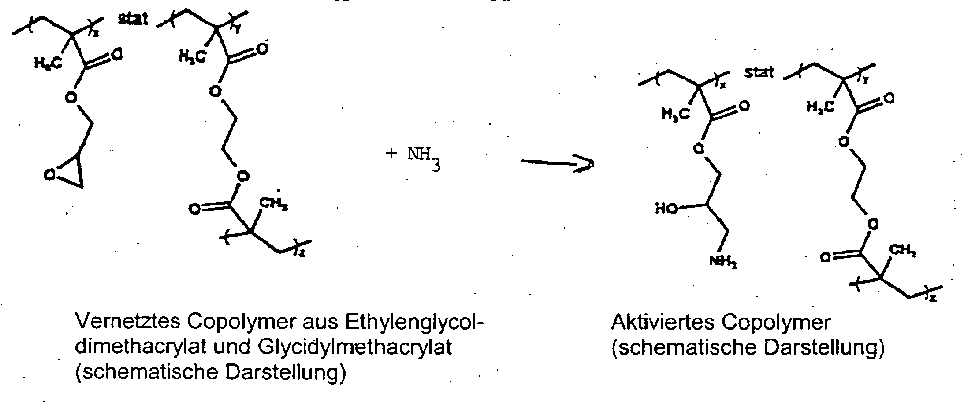

Ein Teil des aktivierten (aminierten) Copolymers wurde bei 121°C hitzesterilisiert, d.h. hitzeaktiviert.

Die so gewonnenen Adsorbentien, d.h. aminiertes Copolymer, nicht hitzeaktiviert und aminiertes, hitzeaktiviertes Copolymer wurden in derselben Weise, wie in Beispiel 1 auf ihre Bindungseigenschaft zu Fibrinogen getestet. In Beispiel 2 betrug die Ausgangskonzentration an Fibrinogen 2,8 mg/ml Plasma.

In der nachfolgend aufgeführten Graphik ist die Fibrinogenabsenkung, d.h. die Fibrinogenbindung in mg/ml Trägermaterial angegeben.

Aus der Graphik ist ersichtlich, daß die Hitzeaktivierung des aminierten Copolymers aus Ethylenglycoldimethacrylat und Glycidylmethacrylat zu einer signifikanten Steigerung der Fibrinogenbindungsfähigkeit führt. In der folgenden Graphik ist das Ergebnis einer Wiederholung des Beispiels 2 wiedergegeben, wobei hier die Ausgangskonzentration an Fibrinogen 3,5 mg/ml Plasma betrug. Dadurch wird der Befund des Beispiels 2 vollständig bestätigt.

### Beispiel 2 (Wiederholung)

## Patentansprüche

1. Verwendung eines Adsorbens zur Herstellung eines Adsorbers zum Absenken der Konzentration von Fibrinogen und/oder Fibrin in Blut oder Blutplasma, wobei das Adsorbens ein Trägermaterial ist, das durch Einführung von kovalent an das Trägermaterial gebundenen basischen Gruppen aktiviert und bei einer Temperatur von mehr als 100°Chitzebehandelt worden ist, wobei die basischen Gruppen Amin-und/oder Amidgruppen sind.

2. Verwendung nach Anspruch 1, wobei das Trägermaterial ein von (Meth)Acrylsäureestem und/oder -amiden abgeleitetes Copolymer ist.

3. Verwendung nach Anspruch 1 oder 2, wobei das von (Meth)Acrylsäureestem und/oder -amiden abgeleitete Copolymer Epoxidgruppen aufweist.

4. Verwendung nach einem oder mehreren der Ansprüche 1 bis 3, wobei das Copolymer durch eine Suspensionspolymerisation hergestellt wurde.

5. Verwendung nach Anspruch 4, wobei das Copolymer ein durch Suspensionspolymerisation von Ethylenglycoldimethacrylat und Glycidylmethacrylat und/oder Allylglycidylether hergestelltes, statistisches Copolymer ist.

6. Verwendung nach Anspruch 4, wobei das Copolymer ein durch Suspensionspolymerisation der monomeren Einheiten
(A) (Meth)Acrylamid in einer Menge von 10 bis 30 Gew.-%,
(B) N,N'-Methylen-bis(meth)acrylamid in einer Menge von 30 bis 80 Gew.-% und
(C) Allylglycidylether und/oder Glycidyl(meth)acrylat in einer Menge von 10 bis 20 Gew.-%, jeweils bezogen auf das Gesamtgewicht der monomeren Einheiten,
hergestelltes statistisches Copolymer ist.

7. Verwendung nach einem oder mehreren der Ansprüche 1 bis 6, wobei die Einführung von kovalent gebundenen basischen Gruppen zur Aktivierung des Trägermaterials durch Aminierung erfolgt.

8. Verwendung nach einem oder mehreren der Ansprüche 1 bis 7, wobei die Hitzebehandlung des aktivierten Trägermaterials eine Sterilisationsbehandlung bei 121°C ist.

9. Verwendung nach einem oder mehreren der Ansprüche 1 bis 8, wobei das Adsorbens in einem Gehäuse vorliegt.

10. Verwendung nach Anspruch 9, wobei das Gehäuse mit Adsorbens ein Volumen von 250 bis 1250 ml aufweist.

11. Verwendung nach Anspruch 9 oder 10, wobei das Gehäuse einen kopfseitigen Einlaßbereich und einen Auslaßbereich am Boden aufweist.

12. Verwendung nach einem oder mehreren der Ansprüche 9 bis 11, wobei das Gehäuse in seinem Auslaßbereich einen Filter aufweist.

13. Verwendung nach Anspruch 12, wobei der Filter ein Partikelfilter ist.

## Claims

1. Use of an adsorbent for producing an adsorber for reducing the concentration of fibrinogen and/or fibrin in blood or blood plasma, where the adsorbent is a carrier material which has been activated by introduction of basic groups covalently bonded to the carrier material, and has been heat-treated at a temperature of more than 100°C, where the basic groups are amine and/or amide groups.

2. Use according to Claim 1, where the carrier material is a copolymer derived from esters and/or amides of (meth)acrylic acid.

3. Use according to Claim 1 or 2, where the copolymer derived from esters and/or amides of (meth)acrylic acid has epoxy groups.

4. Use according to one or more of Claims 1 to 3, where the copolymer has been prepared by a suspension polymerization.

5. Use according to Claim 4, where the copolymer is a random copolymer prepared by suspension polymerization of ethylene glycol dimethacrylate and glycidyl methacrylate and/or allyl glycidyl ether.

6. Use according to Claim 4, where the copolymer is a random copolymer prepared by suspension polymerization of the monomeric units
(A) (meth)acrylamide in an amount of from 10 to 30% by weight,
(B) N,N'-methylenebis(meth)acrylamide in an amount of from 30 to 80% by weight, and
(C) allyl glycidyl ether and/or glycidyl (meth)-acrylate in an amount of from 10 to 20% by weight, in each case based on the total weight of the monomeric units.

7. Use according to one or more of Claims 1 to 6, where the introduction of covalently bonded basic groups for activating the carrier material takes place by amination.

8. Use according to one or more of Claims 1 to 7, where the heat treatment of the activated carrier material is a sterilization treatment at 121°C.

9. Use according to one or more of Claims 1 to 8, where the adsorbent is present in a housing.

10. Use according to Claim 9, where the housing with adsorbent has a volume of from 250 to 1250 ml.

11. Use according to Claim 9 or 10, where the housing has an inlet zone at the top and an outlet zone at the bottom.

12. Use according to one or more of Claims 9 to 11, where the housing has a filter in its outlet zone.

13. Use according to Claim 12, where the filter is a particle filter.

## Revendications

1. Utilisation d'un absorbant dans la fabrication d'un absorbeur pour diminuer la concentration de fibrinogène et/ou de fibrine dans le sang ou le plasma sanguin, dans laquelle l'absorbant est un matériau de support qui est activé par l'introduction de groupes basiques liés de manière covalente au matériau de support, et a subi un traitement thermique à une température de plus de 100° C, les groupes basiques étant des groupes amine et/ou amide.

2. Utilisation selon la revendication 1, dans laquelle le matériau de support est un copolymère dérivé d'esters d'acides (méth)acryliques et/ou d'amides.

3. Utilisation selon la revendication 1 ou 2, dans laquelle le copolymère dérivé d'esters d'acides (méth)acrylique et/ou d'amides présente des groupes époxyde.

4. Utilisation selon l'une ou plusieurs des revendications 1 à 3, dans laquelle le copolymère a été produit par polymérisation en suspension.

5. Utilisation selon la revendication 4, dans laquelle le copolymère est un copolymère statique produit par polymérisation en suspension d'éthylène-glycol-diméthacrylate et de glycidyl-méthacrylate et/ou d'allylglycidyl-éther.

6. Utilisation selon la revendication 4, dans laquelle le copolymère est un copolymère statique produit par polymérisation en suspension des unités monomériques
(A) (méth) acrylamide en une quantité de 10 à 30 % en poids,
(B) N,N'-méthylène-bis(méth)acrylamide en une quantité de 30 à 80 % en poids, et
(C) éther d'allylglycidyléther et/ou glycidyl(méth)acrylate en une quantité de 10 à 20 % en poids, respectivement par rapport au poids total des unités monomériques.

7. Utilisation selon l'une ou plusieurs des revendications 1 à 6, dans laquelle l'introduction de groupes basiques liés de manière covalente s'effectue par amination pour activer le matériau de support.

8. Utilisation selon l'une ou plusieurs des revendications 1 à 7, dans laquelle le traitement thermique du matériau de support activé est un traitement de stérilisation à 121° C.

9. Utilisation selon l'une ou plusieurs des revendications 1 à 8, dans laquelle l'absorbant se présente dans une enveloppe.

10. Utilisation selon la revendication 9, dans laquelle l'enveloppe présente avec l'absorbant un volume de 250 à 1 250 ml.

11. Utilisation selon la revendication 9 ou 10, dans laquelle l'enveloppe présente une zone d'admission de tête et une zone d'échappement de fond.

12. Utilisation selon l'une ou plusieurs des revendications 9 à 11, dans laquelle l'enveloppe présente un filtre dans sa zone d'échappement.

13. Utilisation selon la revendication 12, dans laquelle le filtre est un filtre à particules.
